Europäisches Patentamt

European Patent Office

Office européen des brevets

(11) Publication number: **0 122 326**
**A2**

# (12) EUROPEAN PATENT APPLICATION

(21) Application number: **83111784.1**

(22) Date of filing: **24.11.83**

(51) Int. Cl.³: **G 11 B 5/66**
**G 06 K 19/02, G 08 B 13/24**

(30) Priority: **01.12.82 DE 3244430**

(43) Date of publication of application:
**24.10.84 Bulletin 84/43**

(84) Designated Contracting States:
**BE DE FR GB IT NL SE**

(71) Applicant: **KNOGO CORPORATION**
**100 Tec Street**
**Hicksville New York 11801(US)**

(72) Inventor: **Klinkhardt, Erhard**
**Helmholtz Strasse 6**
**D-4040 Neuss 1(DE)**

(74) Representative: **Schmidt-Evers, Jürgen, Dipl.-Ing. et al,**
**Patentanwälte Dipl.-Ing. H. Mitscherlich Dipl.-Ing. K.**
**Gunschmann Dipl.-Ing. Dr.rer.nat. W. Körber Dipl.-Ing. J.**
**Schmidt-Evers Dipl.-Ing. W. Melzer Steinsdorfstrasse 10**
**D-8000 München 22(DE)**

(54) **Method and apparatus for manufacturing security strips.**

(57) Security strips containing magnetizable components, which are used, for example, to safeguard articles in stores, are manufactured by first applying to a continuous carrier band (11) which is moved progressively in fixed cycles and which has a double-sided adhesive film (11'), strip sections or elements (13') of a hard magnetic material which are spaced equally and which are fed from supply reels (12) and cut into lengths, or a continuous strip (13'') of a hard magnetic material respectively, and then a continuous band (16) of a soft magnetic material and a continuous cover band (17) are drawn off simultaneously from supply reels (14 and 15), are laminated and then combined by means of a rolling process with the carrier band (11) carrying the hard magnetic strip sections or elements (13' or 13'') respectively, to form a security strip assembly (200); and thereafter the multilayer, continuous security strip assembly (200) is passed through a demagnetizing device (109) and is then wound onto a takeup reel (108).

FIG. 1

EP 0 122 326 A2

November 23, 1983

- 1 -

# METHOD AND APPARATUS FOR
# MANUFACTURING SECURITY STRIPS

## BACKGROUND OF THE INVENTION

### Field of the Invention

This invention relates to novel methods and apparaus for manufacturing composite security strips containing an elongated strip of magnetically soft material having elements of magnetically hard material laminated thereto between an outer cover strip and a releasable carrier strip.

### Description of the Prior Art

A security strip containing magnetizable components, which is used in security devices for preventing shoplifting, is known from German Offenglegungsschrift 29 31 1982. This Offenlegungsschrift refers to a method of manufacturing such a security strip but does not give any details as to such manufacture.

Laminated security strips are also shown and described in United States Patents No. 3,765,007, No. 3,820,103 and No. 3,983,552 and methods and apparatus for laminating magnetic markers and similar objects are shown and described in United States Patents No. 3,586,593, No. 3,746,606 and No. 4,222,517. These patents however do not show methods or apparatus for precision manufacture and assembly of security markers economically and at high speed in the manner of the present invention.

## SUMMARY OF THE INVENTION

According to one aspect of the invention there is provided a novel method of manufacturing security strips containing magnetically hard magnetizable elements spaced along a length of magnetically soft material. This novel method comprises the steps intermittently advancing an elongated carrier band along a given path. The carrier band contains an adhesive on one side. Magnetically hard magnetizeable material is fed to a plurality of deposition stations spaced apart along the given path of the carrier band. When the carrier band is stationary, between successive intermittent advancements thereof, elements of the magnetically hard magnetizable material are simultaneously deposited from the depositing stations at spaced apart locations onto the carrier band and then a continuous strip of magnetically soft material is applied to the adhesive on one side of the carrier band.

According to another aspect of the invention there is provided a novel apparatus for manufacturing security strips containing magnetically hard magnetizable elements spaced spaced along a length of magnetically soft material. This novel apparatus comprises means for

83111784.1                    3

intermittently advancing an elongated carrier band, having an adhesive on one side, along a given path, a plurality of depositing stations spaced apart from each other along the path, each depositing station being synchronized with the advancement means so that between successive operations thereof, while the carrier band is stationary along the path, the depositing stations operate simultaneously to deposit said magnetically hard magnetizable elements onto the adhesive on one side of the carrier band at spaced apart locations therealong and a laminating means for laminating a continuous strip of magnetically soft magnetizable material to the carrier band.

In accordance with another aspect of the present invention there is provided a method of manufacturing security strips containing magnetizable components, characterised by the following method steps:

a) a strip of a hard magnetic material is applied to a continuous carrier band having a double-sided adhesive film on one side, which band is unwound from a supply reel rotating periodically, the strip of hard magnetic material being discontinuous and comprising strip sections spaced equally in the longitudinal direction of the carrier band and which are fed from supply reels and cut into lengths, or being a continuous strip;

b) the carrier band is perforated at least along its side edge;

c) a continuous band of a soft magnetic material and a continuous cover band are drawn off simultaneously from respective supply reels, are laminated and are combined, by means of a rolling process, with the carrier band carrying the hard magnetic strip, to form a continuous strip; and

d) the multilayer, continuous strip is fed to a demagnetizing device and is subsequently wound onto a take up reel.

In accordance with a still further aspect of the present invention there is provided an apparatus, for carrying out the above described method, characterised in that there are provided:

a) respective supply reels for supplying a carrier band having a double-sided adhesive film on one side thereof, a soft magnetic band and a cover band, and means for causing periodic progressive movement of the carrier band and continuous progressive movement of the other bands respectively;

b) at least one supply reel for a strip of magnetically hard magnetizable material, a respective deflecting device associated with each supply reel, and a cutting and contact pressure device, which ensure that the strip, which is periodically drawn off from the supply reel, is deflected in such a way that it runs parallel with the self-adhesive film of the carrier band, is then cut off piece by piece into strip sections and pressed against the self-adhesive film of the carrier band so that it adheres thereto;

c) contra-rotating rollers to which the bands are fed, superimposed, for the purpose of combining them to form a security strip; and

d) a take up reel for receiving the manufactured security strip.

There has thus been outlined rather broadly the more important features of the invention in order that the detailed description that follows may be better understood, and in order that the present contribution to the art may be better appreciated. There are, of course, additional features of the invention that will be described more fully hereinafter. Those skilled in the art will appreciate that the conception on which this desclosure is based may readily be utilized as the basis for the designing of other arrangements for carrying out the several purposes of the invention. It is important, therefore, that the disclosure be regarded as including such other arrangements and do not depart from the spirit and scope of the invention.

## BRIEF DESCRIPTION OF THE DRAWINGS

A preferred embodiment of the invention has been chosen for purposes of illustration and description, and is shown in the accompanying drawings, forming a part of the specification wherein:

Figure 1 is a schematic representation of an apparatus for manufacturing security strips according to the method of the invention;

Figure 2 is an exploded view representing the components of a security strip manufactured by the apparatus of Figure 1;

Figure 3 is a top plan view of a further exemplary embodiment of a group of security strips with an arrangement of notches; and

Figure 4 is a top plan view of a further exemplary embodiment of a group of security strips with additionally imprinted information relating to the product to be safeguarded, and with spaces for individual price marking.

DETAILED DESCRIPTION OF THE PREFERRED EMBODIMENT

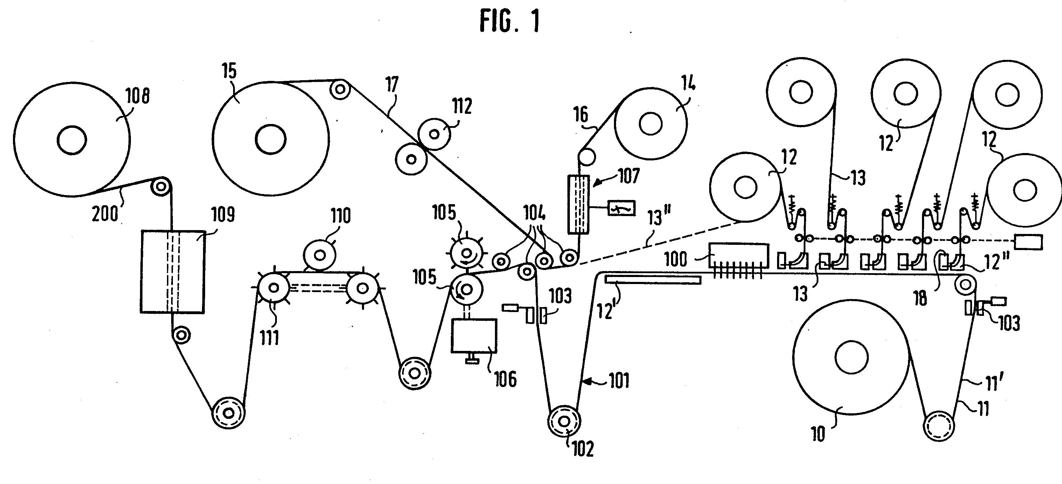

The apparatus represented in Figure 1 comprises a first supply reel 10 from which a continuous carrier band 11 provided with a double-sided adhesive film 11' is unwound.

The carrier band passes from the reel 10 and around a dancer roller (unnumbered). The dancer roller moves up and down between limit switches (not shown) as the carrier band 11 is advanced. When the dancer roller contacts the upper limit switch the reel 10 is driven to unwind it and when the dancer roller contacts the lower limit switch the reel drive is stopped. This arrangement permits advancement of the carrier band by pulling it, yet without requiring it to be pulled hard enough to turn the reel 10.

The carrier band 11 passes from the dance roller up through a brake 103 and a guide roll (unnumbered) to advance along a straight horizontal path. The adhesive film 11' is so arranged on the carrier band that it is on the upper surface of the band as the band moves along the horizontal path.

At the opposite end of the horizontal path there is provided an intermittent feed unit 12' which advances the band along the horizontal path in discrete increments, each increment preferably corresponding to the length of one security strip. A preferred form of the intermittent feed unit is the Model BV-50-100 pneumatic feed unit manufactured by Festo Pneumatic of 395 Moreland Road, hauppagere, New York 17788. The feed unit 12' operates at a speed of approximately 100 cycles per minute.

A plurality of continuous bands 13 of magnetically hard magnetizeable material are drawn simultaneously, likewise in fixed cycles, from a plurality of supply reels 12, and are deflected by way of associated deflecting means 12" coordinated with each suply reel 12, in such a way that the ends of the bands 13 are aligned with the plane of the carrier band 11. The bands 13 are then cut off into strip sections or elements 13' of equal length by means of cutting means 18 coordinated with each deflecting means 12". These strip sections or elements 13' are then applied in uniform alignment with one another to the self-adhesive film 11' of the carrier band 11 and are combined with this carrier band by contact pressure devices (not shown). Each deflecting means 12" and associated cutting means 18 comprises an element depositing station. In the preferred embodiment the deflecting means 12" comprises a pair of closely spaced blocks having mutually facing, closely spaced curved surfaces which together form a curved slot which accomodates the band 13 and guides it from a vertical direction to a nearly but not fully horizontal direction in which it extends down toward the carrier band 11 at an acute angle. Drive rollers (not shown) for the bands 13 are provided just above the deflecting means 12" and these drive rollers are synchronized with the feed unit 12' so that between successive advancements of the carrier band 11, that is when it is at rest, the drive rollers advance the bands 13 down through the curved slots in their respective deflecting means 12" by a predetermined amount corresponding to the length of the strip sections or elements 13' to be deposited onto the carrier band 11. The deflecting means 12" are each positioned and arranged such that when the bands 13 have been so advanced, their ends will just come into contact with the adhesive film 11' on the carrier band 11 and the bands 13 will extend back at an acute angle to the carrier band, up into the deflecting means 12".

The cutting means 18 at each deposition station comprises a plunger which is actuated by a suitable means, such as a cylinder or solenoid, after the band has been advanced through the deflecting means as above described, to press down on the portion of the band 13 which projects out of the deflecting means 12". The downward movement of the plunger against the projecting portion will cause the projecting portion either to snap off or to sheared off from the band itself and to be set down onto the adhesive film 11' on the carrier band.

In an exemplary embodiment of the apparatus, five supply reels 12 are provided so that in each case five strip sections or elements 13' are produced which are combined simultaneously with the self-adhesive carrier band 11 during the feed pauses of the fixed-cycle operating feed unit 12'.

In a preferred form of the invention there are provided a number of depositing stations equal to the number of strip sections or elements 13' to be deposited on one security strip. For example, the arrangement shown in Figure 1 would usually be used to produce security strips having five strip sections or elements 13'.

It is also preferred to arrange the deposition stations so that they are spaced apart from each other by a distance equal to (N-1)/N or (N+1)/N times the length of the stroke of the feed unit 12'. Thus, where the feed unit advances the carrier band by the length of one security strip and the security strip is provided with five strip sections or elements 13', the depositing stations should be spaced apart by 4/5 or 6/5 times the length of the security strip. With this arrangement, each depositing station will simultaneously deposit a strip section or element 13' on a portion of the carrier band 11 associated with a different security strip; and, as to each different security strip, the respective depositing stations each deposit their respective strip sections or elements 13' at a different location along the security strip. In this way the depositing stations are kept far enough apart so that the strip sections or elements 13' being deposited simultaneously from adjacent stations will not shift toward or away from each other due to residual magnetism.

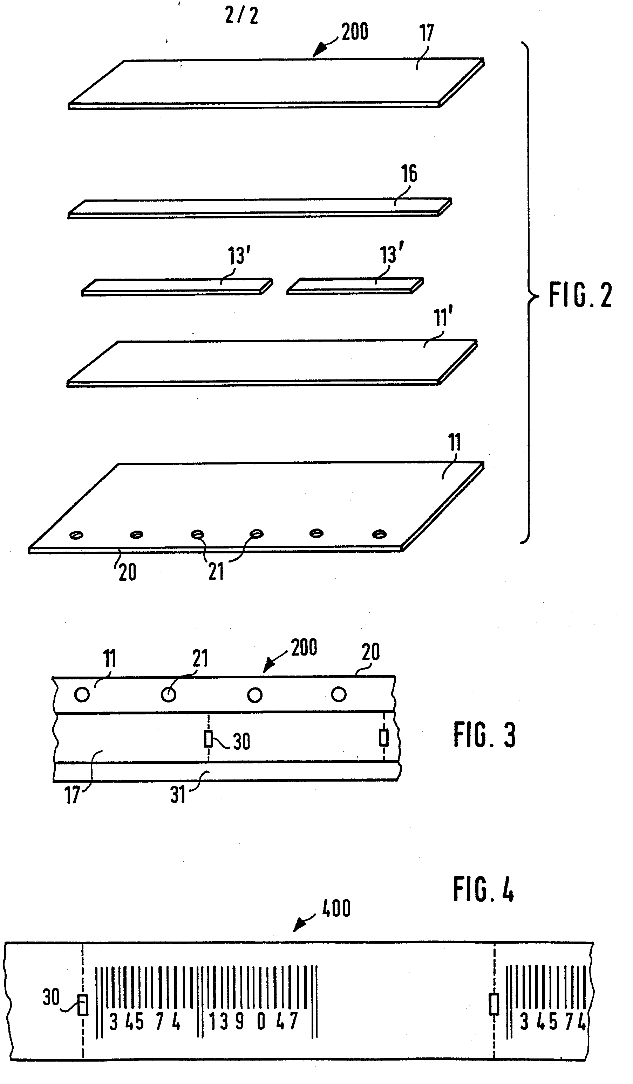

After the hard magnetic strip sections on elements 13' have been deposited onto the carrier band 11, a series of perforations 21 (Figure 2) an made along at least one lateral edge 20 of the carrier band 11 by means of a perforating device 100 arranged in advance of the feed unit 12'. Any standard perforating device capable of punching a series of equally spaced holes along the edge of a continuous strip may be used for this purpose.

This series of perforations facilitates the further manufacture of the security strip and the later handling of the strip when it is secured to the products to be safeguarded    preferably by means of portabel tools. In order to minimize any malfunctions which may occur as the carrier band 11 progresses, advantageously at least one buffer loop 101 is provided. With this, the tension of the carrier band 11 is adjustable by means of a deflecting roller 102 and by means of brakes 103, which respond to the tension of the band.

The apparatus of Figure 1 may be adapted to apply a continuous strip of hard magnetic material to each security strip instead of several individual strip sections or elements. In such case, a continuous strip 13'' of hard magnetic material is drawn off from a supply reel 12 and is combined in the region of deflecting rollers 104 with the remaining components of the security strips.

In order that the feed of hard magnetic material from the rolls 12 may be carried out accurately and without slippage at the drive rollers, suitable means are provided to drive the rolls 12. Conventional dancer roll arrangements (shown schematically in Figure 1) with appropriate limit switches may be provided to control the roll drives.

In addition, or alternatively, as also shown schematically, guide elements may be arranged just above the deflecting means 12'' and controlled in unison to move reciprocally in a horizontal direction between the forward feed cycles of the bands 13. These guide elements engage the bands just above the deflecting means and their horizontal movement pulls a certain length of the bands from their respective  supply rolls 12. When the guide elements move back to their original position there remains a certain amount of slack in the bands 13 between the supply rolls 12 and the deflecting means 12''. Thus the rolls which drive the bands through the deflecting means need only take up this slack and do not have to turn the supply rolls themselves.

Both a continuous band 16 of a soft magnetic material and a continuous cover band 17 consisting of paper or plastic material are drawn off simultaneously and continuously from further supply reels 14 and 15 respectively by means of drive devices (not shown) and, after passing from the deflecting rollers 104, the bands 16 and 17 are superimposed and combined with the carrier band 11, which already carries the hard magnetic strip sections or elements 13'. In this manner the hard magnetic strip sections or elements 13' and the continuous, soft magnetic band 16 are enclosed between the self-adhesive carrier band 11 and the cover band 17.

The width of the cover band 17 exceeds the width of both the hard magnetic strip 13' and the band 16 of soft magnetic material so that both sides its salient peripheral areas come into contact with the adhesive film 11' on the carrier band 11. Contra-rotating rollers 105 press the various layers 11, 13' 16, 17 of the security strips 200 togehter so that intimate union between carrier band 11 and the cover band 17 is produced, and the intermediate strip sections or elements 13' of hard magnetic material and the continuous band 16 of soft magnetic material are fixed immovably in their position.

At least one of the rollers 105 is driven by a self-contained drive 106 which in turn is controlled by

0122326

- 12 -

way of limit switches (not shown) actuated by up and down movement of the dancer roll 102 arranged between the feed unit 12' and the delfecting rolls 104. The thus combined layers 11, 11', 13' (or 13"), 16 and 17 together form a continuous strip assembly 200 which can be separated into individual security strips.

In order to assure a high degree of reliability and quality for the security strip assembly 200, there is advantageously provided a checking device 107 arranged directly after the supply reel 14, through which the soft magnetic continuous band 16 is passed and checked for determined, prescribed magnetic parameters. The checking device 107 in turn is provided with suitable limit switches which, in the event of deviation from the prescribed parameters, stop the device in order to halt for the time being the further manufacture of the security strip assembly 200. Stopping is also indicated by an optical or acoustic signal.

The manufactured security strip assembly 200 is finally wound onto a take up reel 108. Firstly, however, they pass through a demagnetizing device 109 which removes certain magnetization caused, for example, by the manufacture of the security strip assembly 200. The damagnetizing device 109 may consist of a coil through which an alternating current flows and through which the security strip assembly 200 is passed. In order to be able to separate the security strip assembly 200 easily into individual security strips which can be applied to products to be marked it has been found advantageous to provide weakened zones 31 and notches 30 for automatic labelling, such as shown in Figure 3 and in Figure 4, which are equally spaced in such a way that at least the cover band 17 is severed and the soft magnetic strip 16 is also severed. The weakened zones are made in those areas wherein there are spaces between the successively spaced hard magnetic strip sections 13. In order to produce the weakened zones 31 and the notches 30, a rotating blade 110 is advantageously provided under which the manufactured strip assembly 200 is passed before entering the demagnetizing device 109. The strip assembly 200 is advantageously advanced by spiked rollers 111 whose spikes engage the perforations 21 arranged in the carrier band 11. Switchable means (not shown) are provided to synchronize the feed of the security strip assembly 200 and the rotation of the rotating blade 110 in such a way that the weakened zones 31 are made at equal intervals in the longitudinal direction of the security strip assembly 200. The distance between the weakened zones 31 determined the length of the security label later to be attached to the product to be safeguarded.

As shown in Figure 4, a security strip 440 which is particularly advantageous from a practical standpoint contains printing which is preferably applied to the outer surface of the cover band 17. This printing may include information relating to the type and price group of the article to be safeguarded by the security strip. This information can be applied in intelligible script and/or in the bar code appropriate for automatic identification, which is prevalent today. A security strip which is equipped in such a manner simultaneously fulfills several functions. On the one hand, it sefeguards the article against unauthorized removal and thereby reduces losses caused through shoplifting. On the other hand, in the cashpoint area, or even for stock-taking, it allows extensive, automatic recording of prices and/or stock.

The security strip allows particularly rational development of the selling process, as, in suitably equipped cashpoint areas for issuing receipts, the type and price of an article can be determined and a deactivating process can be carried out essentially simultaneously. The deactivating process removes the alarm-triggering properties of the security strip after the purchase price has been duly paid, so that the honest customer can leave the security area unchallenged.

The surface of the cover band 17 is printed, for example by a schematically indicated conventional printer 112 which is arranged immediately after the supply reel 15.

C L A I M S
===========

1. A method of manufacturing security strips containing magnetizable. components,characterized by the following method steps:

a) a strip of a hard magnetic material is applied to a continuous carrier band (11) having a double-sided adhesive film (11'), which band is unwound from a supply reel (10) rotating periodically at a fixed rate, the strip of hard magnetic material being discontinuous and comprising strip sections spaced equally in the longitudinal direction of the carrier band (11) and which are fed from supply reels (12) and cut into lengths, or being a continuous strip (13'');

b) the carrier band is perforated at least along its side edge (20);

c) a continuous band (16) of a soft magnetic material and a continuous cover band (17) are drawn off simultaneously from respective supply reels (14, 15), are laminated and are combined, by means of a rolling process, with the carrier band (11) carrying the hard magnetic strip (13' or 13'') to form a continuous strip assembly (200); and d) the multilayer, continuous strip assembly (200) is fed to a demagnetizing device (109) and is subsequently wound onto a supply reel (108).

2. A method according to claim 1, characterized in that weakened zones (31), extending transversely of the continuous strip assembly (200) are made, spaced according to a desired length of the security strip, thus enabling the continuous strip assembly to be divided into security strips (200) of a desired length.

3. A method according to claim 1, characterized in that notches (30) are formed in a central region of the continuous strip assembly (200) which notches allow optical scanning in automatic labelling devices.

4. A method according to claim 2, wherein the weakened zones are equally spaced along the length of the continuous strip assembly (200).

5. Apparatus for manufacturing security strips containing magnetizeable components comprising:

a) supply reels (19, 14, 15) for supplying respectively, a carrier band (11) having a double-sided adhesive film (11'), a soft magnetic band (16) and a cover band (17), and means for causing periodic progressive movement of the carrier band (11) and continuous progressive movement of the other bands (16, 17);

b) at least one further supply reel (12) for supplying a strip (13) of hard magnetic material, a respective deflecting device (12'') associated with each further supply reel (12) and a cutting and contact pressure device (18), which ensure that the strip (13) which is periodically drawn off from the further supply reel (12) is deflected in such a way that it runs parallel with the self-adhesive film of the carrier band, is then cut off piece by piece into strip sections or elements (13') and is pressed against the self-adhesive film of the carrier band (11) so that it adheres thereto;

c) contra-rotating rollers (105) to which the soft magnetic band (16, 17), the cover band (11) and the band carrying the strip sections or elements (13') are fed and superimposed, for the purpose of combining them to form a security strip (200) assembly; and

d) a take up reel (108) for receiving the manufactured security strip assembly (200).

6. Apparatus according to claim 5, characterized in that a plurality of said further supply reels (12) are provided, whereby after each progressive movement of the carrier band (11), a plurality of strip sections or elements (13') are applied to the self-adhesive film (11') on the carrier band (11).

7. Apparatus according to claim 5, characterized in that there is provided a perforating device (100) which provides the carrier band (11) with perforations (21) along at least one side edge (20).

8. Apparatus according to claim 5, characterized in that means for producing weakened zones are provided along the path of movement of said carrier band beyond said contra-rotating rollers.

9. Apparatus according to claim 8, wherein said means for producing weakened zones comprises a punch.

10. Apparatus according to claim 8, wherein said means for producing weakened zones comprises a rotating blade.

11. Apparatus according to claim 5, characterized in that for the purpose of testing the magnetic properties of the soft magnetic band (16) there is provided a checking device (107) through which the band passes before being combined with the remaining components of the security strip assembly (200), and which is arranged to stop the apparatus upon detection of deviations of the material properties of the soft magnetic band (16) from prescribed parameters..

12. Apparatus according to claim 5, characterized in that a demagnetizing device (109) is provided through which the manufactured security strip (200) assembly passes before it is wound onto a supply reel (108), in order to remove any magnetizing conditions which may have been caused during manufacture.

13. Apparatus according to claim 11, further comprising an alarm which is activated when the apparatus is stopped.

14. A method of manufacturing security strips containing magnetically hard magnetizable elements spaced apart along a length of magnetically soft material, said method comprising the steps of:

intermittently advancing an elongated carrier band along a given path, said carrier band being provided with an adhesive along one side, thereof;

feeding said magnetically hard magnetizable material to a plurality of depositing stations spaced apart along said given path;

when the carrier band is stationary between successive intermittent advancements thereof, simultaneously depositing elements of said magnetically hard magnetizable material from said depositing stations onto the adhesive on said one side of said carrier band; and

applying a continuous strip of said magnetically soft material to said carrier band.

15. A method according to claim 14 wherein said elements of said magnetically hard magnetizable material are separated from continuous bands at spaced apart depositing stations arranged along the path of movement of said carrier band.

16. A method according to claim 15 wherein said continuous bands are advanced from supply rolls by amounts corresponding to the length of said elements and positioned adjacent said carrier band before said elements are separated from their respective continuous bands.

17. A method according to claim 16 wherein said elements are separated from said continuous bands by causing an end portion of said continuous bands to project from a deflecting element and then pressing down on the end portion.

18. A method according to claim 14 wherein said elongated carrier band is advanced intermittently by a distance equal to the length of security strips being manufactured.

19. A method according to claim 18 wherein there are simultaneously deposited a number of magnetically hard magnetizable elements corresponding to the number of such elements or the individual security strips being manufactured.

20. A method according to claim 19 wherein the magnetically hard . magnetizable strips are deposited at locations along the path of movement of said carrier band which are separated by an amount equal to $(N-1)/N$ times the length of the security strips being manufactured where $N$ is the number of elements on each security strip.

21. A method according to claim 19 wherein the magnetically hard magnetizable strips are deposited at locations along the path of movement of said carrier band which are separated by an amount equal to $(N+1)/N$ times the length of the security strips being manufactured where $N$ is the number of elements on each security strip.

22. A method according to claim 14 wherein a cover strip is adhesively applied to said carrier strip to cover said continuous strip of said magnetically soft material and said magnetically hard magnetizable elements.

23. Apparatus for manufacturing security strips containing magnetically hard magnetizable elements spaced apart along a length of magnetically soft material, said apparatus comprising:

means for intermittently advancing an elongated carrier band having adhesive along one side, along a given path;

a plurality of depositing stations arranged in spaced apart relation along said path, said depositing stations being operative to deposit elements of said magnetically hard magnetizable material onto said carrier band when said carrier band is stationary between successive intermittent advancements thereof; and

means for applying a continuous strip of said magnetically soft material to said carrier band.

24. Apparatus according to claim 23 wherein said depositing stations include associated reels containing continuous bands of said magnetically hard magnetizable material and wherein said depositing stations further include separation means for separating elements from the ends of said continuous bands and depositing same onto said carrier strip.

25. Apparatus according to claim 24 wherein said depositing stations include deflecting elements arranged to guide said bands so that an end portion thereof projects out from said deflecting elements toward said carrier band and wherein said separation means each comprise a plunger arranged to press down on said end of the band adjacent its associated deflecting elements.

26. Apparatus according to claim 23 wherein said means for intermittently advancing an elongated carrier band comprises means to advance the carrier band by distance equal to the length of said security strips.

27. Apparatus according to claim 26 wherein there are provided a number of depositing stations corresponding to the number of elements of magnetically hard magnetizable material to be placed on each security strip.

28. Apparatus according to claim 27 wherein said depositing stations are spaced apart from each other along said given path by an amount equal to (N-1)/N times the length of said security strips, where N is the number of elements on each security strip.

29. Apparatus according to claim 27 wherein said depositing stations are spaced apart from each other along said given path by an amount equal to (N+1)/N times the length of said security strips, where N is the number of elements on each security strip.

30. Apparatus according to claim 23 wherein said apparatus further includes means for adhesively applying a cover strip to cover said continuous strip of said magnetically soft material and said magnetically hard magnetizable elements.

# FIG. 1

0122326

0 1 2 2 3 2 6

FIG. 2

FIG. 3

FIG. 4